# EUROPÄISCHE PATENTSCHRIFT

(11) **EP 0 363 892 B1**
(45) Veröffentlichungstag und Bekanntmachung des Hinweises auf die Patenterteilung: **11.08.1993**
(21) Anmeldenummer: 89118785.8
(22) Anmeldetag: 10.10.1989
(51) Int. Cl.: C09K 3/10

(54) **Kleb- und Dichtstoff auf Kautschukbasis und Verfahren zum Verbinden bzw. Verkleben von Komponenten bzw. Bauteilen**
Adhesive and sealant based on rubber, and process for joining or glueing components or construction parts together
Matériau de collage et d'étanchéité à base de caoutchouc et procédé pour coller, respectivement lier des composants, respectivement des matériaux de construction

(30) Priorität: 13.10.1988 DE 3834818
(43) Veröffentlichungstag der Anmeldung: 18.04.1990
(73) Patentinhaber: Teroson GmbH, 69046 Heidelberg (DE)
(72) Erfinder: Lipponer, Gerhard, D-6901 Schönau (DE); Nimtz, Fritz, D-6906 Leimen (DE)
(74) Vertreter: UEXKÜLL & STOLBERG

(56) Entgegenhaltungen:
- US-A- 4 569 968
- PATENT ABSTRACTS OF JAPAN, vol 12, no 373 (C-534)[3220], 6-10-1988, Tokyo, JP & JP-A-63 125554

## Beschreibung

Die Erfindung betrifft niedrigviskose, bei erhöhten Temperaturen leicht pumpbare Kleb- und Dichtstoffe auf Kautschukbasis, die sich mit üblichen Vernetzungssystemen vulkanisieren lassen.

Lösungsmittelfreie Kleb- und Dichtstoffe auf Kautschukbasis, die insbesondere zur Verwendung im Automobilbau geeignet sind, sind seit einiger Zeit bekannt. Einen Überblick über die Entwicklung auf diesem Gebiet geben die Erläuterungen in der europäischen Patentschrift 97 394 und der europäischen Patentanmeldung 256 316. Allerdings waren diese bekannten Kleb- und Dichtstoffe auf Kautschukbasis noch nicht voll befriedigend, so daß in der EP-PS 97 394 die Verwendung von flüssigem Polybutadien vorgeschlagen wird, das mindestens 40 % der Ungesättigtheit in der 1,4-Konfiguration hat. Vorzugsweise wird das flüssige Polybutadien mit geringen Mengen festem Kautschuk, insbesondere festem Polybutadien, gemischt.

In der europäischen Patentanmeldung 256 316 ist allerdings angegeben, daß auch die aus der EP-PS 97 394 bekannten Kleb-und Dichtstoffe noch erhebliche Mängel aufweisen. Es wird deshalb vorgeschlagen, anstelle von festen Kautschuken wie festem Polybutadien einen oder mehrere chemisch irreversibel depolymerisierte Festkautschuke natürlichen oder synthetischen Ursprungs in Mengen von 1,5 bis 5 Gew.% einzusetzen. Dadurch sollen die Klebstoffe ein besseres rheologisches Verhalten zeigen. Es hat sich aber gezeigt, daß die Kleb- und Dichtstoffe gemäß der europäischen Patentanmeldung 256 316 nicht nur den Nachteil des zusätzlichen Verfahrensschrittes der Depolymerisation aufweisen, sondern darüber hinaus genauso wie die aus der EP-PS 97 394 bekannten Kleb- und Dichtstoffe noch keine optimalen Klebeigenschaften besitzen.

Der Erfindung lag deshalb die Aufgabe zugrunde, Kleb- und Dichtstoffe der aus der EP-PS 97 394 und der europäischen Patentanmeldung 256 316 bekannten Art und insbesondere deren Haftung auf Metall und deren Bruchverhalten zu verbessern.

Zur Lösung dieser Aufgabe wird ein Kleb- und Dichtstoff auf Kautschukbasis enthaltend
a) 15 bis 50 Gew.% stereospezifischen Polybutadien-Flüssigkautschuk,
b) 2 bis 10 Gew.% stereospezifischen cis-1,4-Polybutadien-Festkautschuk,
c) 2 bis 10 Gew.% gepulverten Schwefel,
d) 0,5 bis 10 Gew.% eines organischen Beschleunigers oder eines Beschleunigersystems,
e) 30 bis 70 Gew.% Füllstoffe und gegebenenfalls
f) 2 bis 10 Gew.% Haftvermittler,
vorgeschlagen, der dadurch gekennzeichnet ist, daß er als Komponente a) OH-terminiertes Polybutadien enthält.

Die bevorzugten erfindungsgemäßen Kleb- und Dichtstoffe enthalten 30 bis 40 Gew.% der Komponente a), 3 bis 5 Gew.% der Komponente b), 3 bis 5 Gew.% der Komponente c), 0,5 bis 2 Gew.% der Komponente d), 50 bis 70 Gew.% der Komponente e) und gegebenenfalls 3 bis 10 Gew.% der Komponente f). Darüber hinaus können die erfindungsgemäßen Kleb- und Dichtstoffe weitere übliche Bestandteile wie Alterungsschutzmittel, Thixotropiemittel, Antioxidantien usw. enthalten.

Die angestrebte Verbesserung der Haftungs- und Brucheigenschaften der erfindungsgemäßen Kleb- und Dichtstoffe wird durch die Verwendung von OH-terminiertem flüssigen Polybutadien erreicht. Vorzugsweise besitzt das flüssige OH-terminierte Polybutadien eine OH-Funktionalität von 2,0 bis 3,0, ein Molekulargewicht von 1000 bis 5000, eine Viskosität von 0,5 bis 10 Pas (bei 30°C) und hat mindestens 50 % der Ungesättigtheit in der trans-1,4-Konfiguration und mindestens 10 % der Ungesättigtheit in der cis-1,4-Konfiguration. Ein beispielsweise geeignetes flüssiges OH-terminiertes Polybutadien besitzt ein Molekulargewicht von 2800 und eine OH-Funktionalität von 2,4 bis 2,6, wobei 60 % der Ungesättigtheit auf die trans-1,4-Konfiguration, 20 % der Ungesättigtheit auf die cis-1,4-Konfiguration und 20 % der Ungesättigtheit auf die 1,2-Konfiguration verteilt sind.

Alle anderen Komponenten entsprechen dem Stand der Technik, so daß insoweit auf die EP-PS 97 394 und die europäische Patentanmeldung 256 316 verwiesen werden kann. Zu erwähnen ist allenfalls, daß die Ungesättigtheit der Komponente b) in der cis-1,4-Konfiguration mindestens 96 % betragen soll. Auch die Anwendung des erfindungsgemäßen Kleb-und Dichtstoffs bietet keine Besonderheiten und erfolgt in der bekannten Weise, wie sie z.B. in den oben genannten Druckschriften beschrieben ist.

Die erfindungsgemäß verwendbaren flüssigen OH-terminierten Polybutadiene, die üblicherweise durch Emulsionspolymerisation erhalten werden, sind aus der Polyurethanchemie bekannt und werden dort zur Einbringung von sogenannten "Weichsegmenten" eingesetzt. Durch die in ihnen enthaltenen endständigen OH-Gruppen wird bei den erfindungsgemäßen Kleb- und Dichtstoffen eine wesentlich verbesserte Haftung auf Metall gegenüber nicht OH-terminierten Polybutadienen erzielt. So weisen Scherfestigkeitsprüfkörper, die mit den erfindungsgemäßen Klebstoffen angelegt wurden, nach der Vulkanisation und dem Zerreißen stets ein kohäsives Bruchbild auf, während bei Verwendung eines Dichtstoffs auf Basis eines nicht speziell OH-terminierten flüssigen Polybutadiens eine Neigung zu adhäsisivem Bruch besteht.

## Patentansprüche

1. Kleb- und Dichtstoff auf Kautschukbasis enthaltend
a) 15 bis 50 Gew.% stereospezifischen Polybutadien-Flüssigkautschuk,
b) 2 bis 10 Gew.% stereospezifischen cis-1,4-Polybutadien-Festkautschuk,
c) 2 bis 10 Gew.% Schwefel,
d) 0,5 bis 10 Gew.% eines organischen Beschleunigers oder eines Beschleunigersystems,
e) 30 bis 70 Gew.% Füllstoffe und gegebenenfalls
f) 2 bis 10 Gew.% Haftvermittler,
dadurch gekennzeichnet, daß er als Komponente a) OH-terminiertes Polybutadien enthält.

2. Kleb- und Dichtstoff nach Anspruch 1, dadurch gekennzeichnet, daß das OH-terminierte flüssige Polybutadien eine OH-Funktionalität von 2,0 bis 3,0, ein Molekulargewicht von 1000 bis 5000 und eine Viskosität von 0,5 bis 10 Pas aufweist und mindestens 50 % der Ungesättigtheit in der trans-1,4-Konfiguration und mindestens 10 % der Ungesättigtheit in der cis-1,4-Konfiguration hat.

3. Verfahren zum Verbinden bzw. Verkleben von Komponenten bzw. Bauteilen, dadurch gekennzeichnet, daß man mit einem Klebstoff gemäß einem der Ansprüche 1 oder 2 einen Überzug auf mindestens einer der zu verbindenden bzw. zu verklebenden Flächen der Komponenten bzw. Bauteile vor oder nach dem Zusammenfügen dieser Komponenten bzw. Bauteile ausbildet und, falls noch nicht geschehen, nach Zusammenfügen der Komponenten bzw. Bauteile, erwärmt, um den Klebstoff auszuhärten.

4. Verfahren nach Anspruch 3, dadurch gekennzeichnet, daß man Komponenten bzw. Bauteile, insbesondere aus Metall einschließlich geölten Metallflächen, im Automobilbau verklebt.

## Claims

1. A rubber-based adhesive and sealant containing
a) 15 to 50 % by weight stereospecific polybutadiene liquid rubber,
b) 2 to 10 % by weight stereospecific cis-1,4-polybutadiene solid rubber
c) 2 to 10 % by weight sulphur
d) 0.5 to 10 % by weight of an organic accelerator or an accelerator system
e) 30 to 70 % by weight fillers and optionally
f) 2 to 10 % by weight bonding agent
characterised in that it contains OH-terminated polybutadiene as component a).

2. An adhesive and sealant as claimed in Claim 1, characterised in that the OH-terminated liquid polybutadiene has an OH-functionality of 2,0 to 3,0, a molecular weight of 1000 to 5000, and a viscosity of 0.5 to 10 Pas and possesses at least 50% of the unsaturation in the trans-1,4-configuration and at least 10% of the unsaturation in the cis-1,4-configuration.

3. A process for the connection or gluing of components or parts, characterised in that, using an adhesive according to one of Claims 1 to 2, prior to or following the joining together of the components or parts a coating is formed on at least one of the surfaces, which are to be connected or glued, of said components or parts, and after the joining together of the components or parts said coating is heated - if such heating has not already been effected - in order to fully harden the adhesive.

4. A process as claimed in Claim 3, characterised in that components or parts, in particular composed of metal and including oiled metal surfaces, in automobile construction are glued.

## Revendications

1. Matériau de collage et d'étanchéité à base de caoutchouc renfermant
a) de 15 à 50 % en poids de caoutchouc liquide de polybutadiène stéréospécifique,
b) de 2 à 10 % en poids de caoutchouc solide de cis-1,4 polybutadiène stéréospécifique,
c) de 2 à 10 % en poids de soufre,
d) de 0,5 à 10 % en poids d'un accélérateur ou d'un système d'accélérateurs organiques,
e) de 30 à 70 % en poids de charge et le cas échéant,
f) de 2 à 10 % en poids de promoteur d'adhésion,
caractérisé en ce qu'il renferme comme composant a) du polybutadiène terminé par un hydroxyle (OH).

2. Matériau de collage et d'étanchéité selon la revendication 1, caractérisé en ce que le polybutadiène liquide terminé par un hydroxyle, possède une fonctionnalité en hydroxyle allant de 2,0 à 3,0, un poids moléculaire de 1 000 à 5 000 et une viscosité allant de 0,5 à 10 Pas et a au moins 50 % de l'insaturation sous la configuration trans-1,4 et au moins 10 % de l'insaturation sous la configuration cis1,4.

3. Procédé d'assemblage ou d'encollage de composants ou d'éléments de construction, caractérisé en ce que l'on forme avec une colle selon l'une des revendications 1 ou 2, un revêtement sur au moins une des surfaces à assembler ou à encoller, des composants ou des éléments de construction avant ou après l'assemblage de ces composants ou de ces éléments de construction et, au cas où cela ne se serait pas encore produit, on chauffe après assemblage des composants ou des éléments de construction, de façon à durcir la substance adhésive.

4. Procédé selon la revendication 3, caractérisé en ce que l'on colle les composants ou les éléments de construction, en particulier des surfaces métalliques inclusivement lubrifiées à partir du métal, dans la construction automobile.
